# EUROPEAN PATENT APPLICATION

(11) **EP 4 187 765 A1**
(43) Date of publication of application: **31.05.2023**
(21) Application number: 22201384.9
(22) Date of filing: 13.10.2022
(51) Int. Cl.: H02M 1/32, H02M 7/5387

(54) **METHOD OF SAFELY DISCHARGING DC LINK CAPACITOR OF MULTIPLE PHASE INVERTER**

(30) Priority: 29.11.2021 RU 2021134945
(71) Applicant: NXP USA, Inc., Austin TX 78735 (US)
(72) Inventor: KANDAH, Ibrahim Shihadeh, 5656 AG Eindhoven (NL); RUDIAK, Jerry, 5656 AG Eindhoven (NL); EVERSON, Steven Ray, 5656 AG Eindhoven (NL); RYABCHENKOV, Sergey Sergeevich, 5656 AG Eindhoven (NL)
(74) Representative: Schmütz, Christian Klaus Johannes

(57) **Abstract**

A method of discharging a link capacitor coupled between link nodes of a multiple phase inverter in which each phase comprises a pair of switches coupled in series between the link nodes, including turning off a first switch of a first phase, turning on a second switch of the first phase, and while the second switch of the first phase remains turned on, activating the first switch of the first phase with pulses and monitoring a link voltage across the link nodes until the link capacitor is discharged. Pulse width and duty cycle may be adjusted, or may remain fixed while pulse magnitude is adjusted until a desired discharge rate is reached. The temperature of pulsed phase switches may be monitored in which discharge operation is suspended while temperature is above a threshold. The switches of multiple phases may be pulsed to distribute discharge among multiple phases.

## Description

### FIELD OF THE INVENTION

The present invention relates, in general, to phase inverters, and more particularly to a method of safely discharging a DC link capacitor of a multiple phase inverter.

### DESCRIPTION OF THE RELATED ART

In electric vehicle (EV) and hybrid electric vehicle (HEV) systems, a multiple phase inverter may be used to convert a high direct-current (DC) voltage of a battery pack to pulse width modulation (PWM) signals for controlling an electric motor used to propel the vehicle. A large capacitor, referred to as a DC Link capacitor, is generally located physically close to electronic switches of the inverter to minimize parasitic inductance. The DC link capacitor, for example, may be connected to the battery pack thru contact switches. During key off when the contact switches are opened, the DC link capacitor should be discharged for safety.

The most common means of discharging the DC link capacitor is through one or more large power resistors and corresponding power switches controlled through a dedicated galvanic isolator. The power resistors, power switches, and isolator add cost and consume valuable board area.

### BRIEF DESCRIPTION OF THE DRAWINGS

Embodiments of the present invention are illustrated by way of example and are not limited by the accompanying figures. Similar references in the figures may indicate similar elements. Elements in the figures are illustrated for simplicity and clarity and have not necessarily been drawn to scale.
FIG. 1 is a simplified schematic and block diagram of a power system including an inverter implemented according to an embodiment of the present disclosure.
FIG. 2 is a simplified block and schematic diagram of a portion of the inverter of FIG. 1 with additional detail of the controller of FIG. 1 for controlling a discharge operation according to one embodiment of the present disclosure.
FIG. 3 is a simplified schematic diagram of a driver circuit that may be used within the discharge control circuitry of FIG. 2 of the controller of FIG. 1 for driving the UL voltage signal during the discharge operation according to one embodiment of the present disclosure.
FIG. 4 is a simplified schematic diagram of a driver circuit that may be used within the discharge control circuitry of FIG. 2 for driving the UL voltage signal according to another embodiment of the present disclosure.
FIG. 5 is a timing diagram plotting discharge current, gate voltage, and instantaneous power dissipation versus time using a selected discharge method according to one embodiment of the present disclosure.
FIG. 6 is a flowchart diagram illustrating operation of the discharge control circuitry of FIG. 2 for controlling discharge operations according to one embodiment of the present disclosure.
FIG. 7 is a flowchart diagram illustrating operation of the discharge control circuitry of FIG. 2 for performing discharge operations according to one embodiment of the present disclosure.
FIG. 8 is a timing diagram plotting +/- DCLINK voltage across the link capacitor of FIG. 1, discharge current, and instantaneous power dissipation versus time using a selected discharge method according to one embodiment of the present disclosure.
FIG. 9 shows alternative flowchart blocks that may replace blocks of FIGs 6 and 7 according to an alternative embodiment of the present disclosure in which discharge is distributed among multiple phases.

### DETAILED DESCRIPTION

A method is described herein to discharge the large DC link capacitor coupled between DC link nodes of a multiple phase inverter using one or more of the phases (or phase legs) of the inverter. A first electronic switch of each of the phases is turned off while the second switch of at least one of the phases is turned on. In those phases in which the second switch is turned on, the first switch is activated with pulses while the link voltage across the link nodes is monitored until the link capacitor is fully discharged. Although the pulses may be fixed, such as having a fixed pulse width, a fixed duty cycle and a fixed magnitude, one or more of these pulse parameters may be adjusted over time until a predetermined target discharge rate is achieved. In one embodiment, the pulse magnitude begins relatively small and is adjustably increased until the desired discharge rate is achieved. The desired discharge rate, for example, is sufficient to completely discharge the capacitor within a predetermined time period while maintaining maximum power consumption below a predetermined power threshold. The temperature of each electronic switch being activated during discharge operation may be monitored. The discharge operation may be temporarily suspended if the temperature of the switch exceeds a predetermined high temperature threshold.

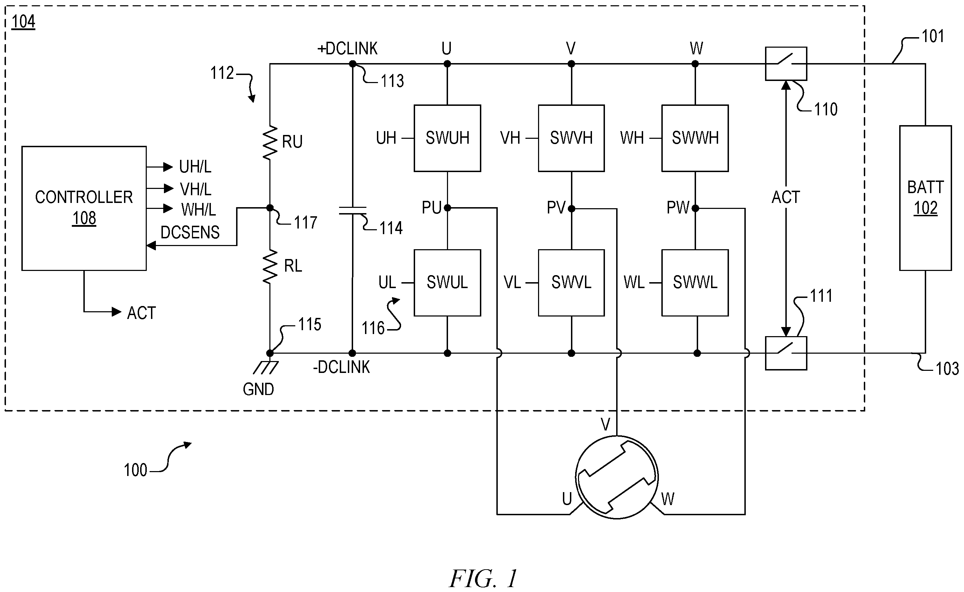

FIG. 1 is a simplified schematic and block diagram of a power system 100 including an inverter 104 implemented according to an embodiment of the present disclosure. The power system 100 includes a battery 102, the inverter 104, and an electric motor 106. The battery 102 has a positive terminal coupled to a positive link node 101 and has a negative terminal coupled to a negative link node 103, in which the nodes 101 and 103 are couped to the inverter 104. The inverter 104 converts DC voltage of the battery 102 into AC voltages used to drive and control the electric motor 106. The battery 102 may be a high voltage (HV) battery, such as having DC voltage of several hundred volts (V), such as 400 Volts (V) to 800V or the like, although the present disclosure is applicable to any high voltage level. The electric motor 106 may be any type depending upon the application, such as a BLDC (brushless DC) motor, a PM (permanent magnet) synchronous motor, an AC induction motor, etc. The illustrated electric motor 106 is a 3-phase motor, although it is understood that applicable embodiments may be provided for controlling electric motors with any number of phases including those with 2 or more phases. The power system 100 may be configured for any one of many different types of applications, such as automotive vehicles including electric vehicle (EV) and hybrid electric vehicle (HEV) systems, along with other types of applications, such as fuel pumps, oil pumps, water pumps, air-conditioning fans, motor cooling fans, etc., as well as power converters that drive any type of inductive load or that include inductive elements at the output, such as AC-DC and DC-DC converters and the like.

The inverter 104 includes a controller 108, an upper activation switch 110, a lower activation switch 111, a voltage divider 112, a link capacitor 114, and a set of phase switches 116 collectively implementing a first phase U, a second phase V, and a third phase W. The controller 108 controls the activation switches 110 and 111 via and activation signal ACT for selectively coupling battery nodes 101 and 103 to a positive link node 113 and negative link node 115. The negative link node 115 may be coupled to a reference voltage node such as chassis ground (GND) or the like. The voltage divider 112 includes an upper resistor RU coupled between node 113 and an intermediate node 117 and a lower resistor RL coupled between nodes 117 and 115. The link capacitor 114 is coupled between nodes 113 and 115 and is generally located physically close to the phase switches 116 to minimize parasitic inductance.

The set of phase switches 116 includes an upper switch SWUH coupled in series with a lower switch SWUL between nodes 113 and 115 forming a first phase U having an intermediate node PU, an upper switch SWVH coupled in series with a lower switch SWVL between nodes 113 and 115 forming a second phase V having an intermediate node PV, and an upper switch SWWH coupled in series with a lower switch SWWL between nodes 113 and 115 forming a third phase W having an intermediate node PW. The intermediate nodes PU, PV and PW are coupled to phase terminals U, V, and W, respectively, of the electric motor 106. Each of the phase switches 116 may be implemented in any suitable manner for handling high voltage and high current levels, such as, for example, one or more silicon carbide (SiC) metal-oxide semiconductor, field-effect transistors (MOSFETs), insulated gate bipolar transistors (IGBTs), etc. Multiple ones of such transistor switches may be coupled in parallel for distributing large current levels. The switches SWHU, SWUL, SWVH, SWVL, SWWH, and SWWL have control terminals receiving control signals UH, UL, VH, VL, WH, and WL, respectively, for controlling operation.

The controller 108 may be responsive to additional control systems (not shown), such as control mechanisms manipulated by an operator or driver or the like. For example, a driver of an EV or HEV may activate an ignition switch or the like causing the controller 108 to close the switches 110 and 111 to energize the inverter 104 for controlling the electric motor 106. During operation, the driver may manipulate a "gas" pedal or accelerator or the like or a brake pedal or the like causing the controller 108 to adjust pulse width modulation (PWM) voltages provided as the control signals UH and UL (UH/L), VH and VL (VH/L), and WH and WL (WH/L) to corresponding switch terminals to adjust the speed of the electric motor 106. The controller 108 is shown in simplified form as a central controller, which may instead include separate low voltage and high voltage portions along with distributed gate drivers and other interface circuitry (not shown) within the controller 108 or between the controller 108 and the phase switches 116.

During operation of the power system 100, the controller 108 asserts ACT to close the activation switches 110 and 111 so that the battery voltage is applied across nodes 113 and 115 developing a DC voltage +/-DCLINK across the voltage divider 112, the link capacitor 114, and the phases U, V, and W. In this manner, the link capacitor 114 is charged with the full voltage of the battery 102. The controller 108 generates PWM control voltages on output signals UH/L for controlling the switches SWUH and SWUL of phase U, PWM control voltages on output signals VH/L for controlling the switches SWVH and SWVL of phase V, and PWM control voltages on output signals WH/L for controlling the switches SWWH and SWWL of phase W for controlling operation of the electric motor 106. Specific PWM operation for controlling the electric motor 106 is not described herein as being beyond the scope of the present disclosure.

When the power system 100 is deactivated, the controller 108 de-asserts ACT to open the activation switches 110 and 111 thereby disconnecting the battery 102 from nodes 113 and 115. Although power is essentially removed from the phases U, V, and W, the link capacitor 114 remains charged with the high battery voltage posing a significant safety hazard. Node 117 develops a sense voltage DCSENS provided back to the controller 108 for sensing the voltage of the link capacitor 114. The controller 108 generates discharge control signals for controlling selected ones of the phase switches 116 for discharging the link capacitor 114 as described further herein. The controller 108 may generate a pair of discharge control voltages on signals UH and UL for controlling the switches SWUH and SWUL of phase U. In addition, or in the alternative, the controller 108 may generate a pair of discharge control voltages on signals VH and VL for controlling the switches SWVH and SWVL of phase V. In addition, or in the alternative, the controller 108 may generate a pair of discharge control voltages on signals WH and WL for controlling the switches SWWH and SWWL of phase W. Any one pair, any two pair, or even all three pairs of the control signals UH/L, VH/L, and WH/L may be included for controlling any one, any pair, or all three phases U, V, and. W for discharging the link capacitor 114 as further described herein. The same is true for inverters with any other number of phases, such as 2 phases, 6 phases, 9 phases, 12 phases, etc., in which any one or more of the phases may be controlled for discharging a corresponding link capacitor.

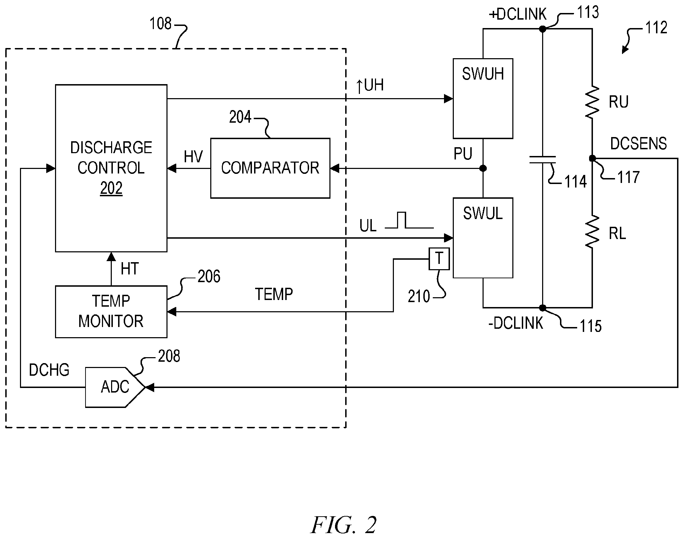

FIG. 2 is a simplified block and schematic diagram of a portion of the inverter 104 with additional detail of the controller 108 for controlling a discharge operation according to one embodiment of the present disclosure. Again, the illustrated controller 108 is simplified in which only applicable portions are shown for a full and complete understanding of the present disclosure. The illustrated controller 108 includes discharge control circuitry 202 for providing discharge control voltages on the UH/L output signals used during the discharge operation, a comparator 204 for sensing intermediate node PU of phase U, a temperature monitor 206 for monitoring temperature of one or more of the phase switches 116, and an analog to digital converter (ADC) 208 for tracking the voltage of the link capacitor 114 as further described herein.

The electronic switches SWUH and SWUL of phase U, the link capacitor 114 and the resistors RU and RL of the voltage divider 112 are shown coupled between the +/-DCLINK nodes 113 and 115 as previously described. The comparator 204 has an input coupled to the intermediate node PU of the electronic switches SWUH and SWUL. Although not shown, the comparator 204 may be coupled to PU via interface circuitry or the like generally including minimal protection circuitry, such as one or more diodes or resistors and the like. The comparator 204 provides a high voltage (HV) signal to the discharge control circuitry 202, which uses the HV signal to determine whether and when the link capacitor 114 is discharged. The HV signal, for example, is initially high when the link capacitor 114 is charged and toggles low when the voltage of node PU drops below a predetermined minimum voltage level. In one embodiment, the comparator 204 compares the voltage of PU with the predetermined minimum voltage level, such as 1V or the like, for generating the HV signal.

It is noted that the comparator 204 may be a desaturation comparator that is used during normal operation to detect a potential abnormal condition, and that is repurposed for detecting discharge of the link capacitor 114 during the discharge operation. The voltage of node PU should be very low when SWUL is on during normal operation. If the voltage of PU is above a predetermined low level while SWUL is turned on during normal operation, then the comparator 204 asserts HV high indicating the abnormal condition. In one embodiment, the desaturation comparator is repurposed and used as the comparator 204 during discharge operation. During initial discharge operation when the voltage of the link capacitor 114 is charged or at least greater than the predetermined low level, then HV is asserted high. When the link capacitor 114 is discharged to below the predetermined low level, then the comparator 204 toggles HV low indicating discharge operation is complete.

The DCSENS voltage at node 117 between the resistors RU and RL is provided back to an input of the ADC 208, which has an output providing a digital value DCHG indicative of the voltage level of the link capacitor 114. The discharge control circuitry 202 uses DCHG to track the discharge rate as further described herein. It is noted that the ratio of the resistance of the resistors RU and RL, or RU/RL, is sufficiently large so that DCSENS is a relatively small voltage even when the link capacitor 114 is fully charged. The DCHG value is monitored over time by the discharge control circuitry 202 to determine whether to increase or decrease the current discharge rate.

A temperature sensor 210 is positioned in close proximity of the switch SWUL provides a signal TEMP to the temperature monitor 206 of the controller 108. During discharge using the electronic switch SWUL as further described herein, the temperature of SWUL may increase above a predetermined high threshold level. The temperature monitor 206 monitors the temperature of SWUL and asserts a high temperature signal HT when the switch temperature exceeds the high threshold level. The discharge control circuitry 202 may then temporarily suspend discharge operation until the temperature drops back below the high threshold level.

The discharge control circuitry 202 receives the HV and HT signals and the DCHG value and generates the discharge voltages on signals UH and UL to control the electronic switches SWUH and SWUL, respectively, during the discharge operation. In one embodiment, the discharge control circuitry 202 first turns off SWUL by driving UL low, and then turns SWUH fully on by driving UH high. The discharge control circuitry 202 then applies pulses on UL to discharge the link capacitor 114 as further described herein. The rate of discharge is determined by monitoring the DCHG value over time, in which the discharge control circuitry 202 adjusts one or more of the pulse magnitude, pulse width, and pulse duty cycle until a predetermined discharge rate is achieved. The comparator 204 toggles the HV signal low when the link capacitor 114 is fully discharged. The discharge control circuitry 202 temporarily suspends the discharge operation while the HT signal is asserted by the temperature monitor 206. Although not specifically shown, the discharge controller 202 may additionally turn off either one or both of the electronic switches of the other phases V and W to ensure that discharge is controlled by only one phase.

Various alternative embodiments are contemplated. In a first variation, the roles of SWUH and SWUL may be reversed, in which case the discharge control circuitry 202 first turns off SWUH and then turns SWUL fully on, and then applies pulses on UH to discharge the link capacitor 114. Another temperature sensor (not shown) may be provided in the proximity of SWUH (or the temperature sensor 210 is instead installed near SWUH) to enable the temperature monitor 206 to monitor the temperature of SWUH during discharge. Discharge operation is substantially the same for the first variation. In a second variation, the electronic switches of either the phase V or the phase W may be controlled in substantially the same manner. In other words, any one of the phases U, V, or W may be used for the discharge operation. In a third variation, multiple phases up to all of the phases may be used for the discharge operation, such as U and V, U and W, V and W, or even U, V and W. When applying the discharge operation using multiple phases, the pulses applied may be reduced for each phase or alternated between multiple phases for controlling discharge.

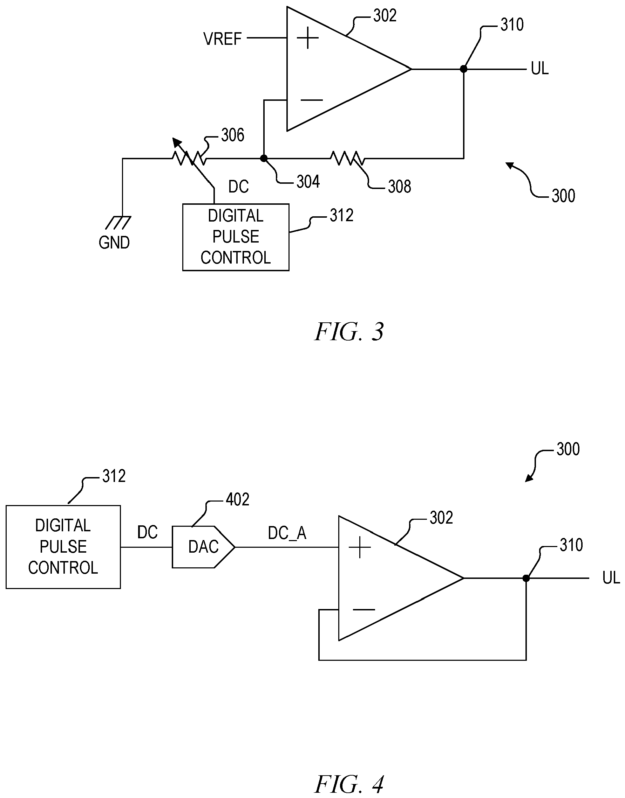

FIG. 3 is a simplified schematic diagram of a driver circuit 300 that may be used within the discharge control circuitry 202 of the controller 108 for driving the UL voltage signal during the discharge operation according to one embodiment of the present disclosure. A reference voltage VREF is provided to a noninverting or positive input of an amplifier 302, having an inverting or negative input coupled to an intermediate feedback node 304. A digitally adjustable resistor 306 is coupled between node 304 and GND and a feedback resistor 308 is coupled between node 304 and an output node 310 developing the UL voltage. A digital pulse control circuit 312 has a digital output providing a digital control signal DC to an adjust input of the adjustable resistor 306. In operation, the digital pulse control circuit 312 generates and adjusts the DC signal to control the resistance of the adjustable resistor 306 for controlling the magnitude of UL. The discharge control circuitry 202 may control the DC signal via the digital pulse control circuit 312 to generate voltage pulses on UL for activating SWUL in a controlled manner for controlling the discharge rate as further described herein.

Although not specifically shown, the adjustable resistor 306 may incorporate multiple resistors and switches in which resistances are selected by digital switches controlled by the DC signal. The resistors and switches collectively implement a desired range of resistances, in which the DC signal, incorporating multiple binary signals, is controlled to select a desired resistance. The selected resistance adjusts the gain of the amplifier 302 which corresponding adjusts the voltage level of UL.

FIG. 4 is a simplified schematic diagram of a driver circuit 400 that may be used within the discharge control circuitry 202 for driving the UL voltage signal according to another embodiment of the present disclosure. The driver circuit 400 includes the digital pulse control circuit 312 providing the DC signal and the amplifier 302. In this case, however, DC is provided to an input of a digital to analog converter (DAC) 402, having an output providing a corresponding analog voltage signal DC_A to the positive input of the amplifier 302. The output of the amplifier 302 is coupled to the node 310 providing UL, which is fed back to its negative input. In this case, the digital pulse control circuit 312 generates the DC signal to control the magnitude of DC_A, in which the amplifier 302 is illustrated as a unity gain buffer for driving UL having substantially the same magnitude as DC_A, which is directly controlled by DC. Thus, the value of DC more directly controls the magnitude of UL. Again, the discharge control circuitry 202 may control the DC signal via the digital pulse control circuit 312 to generate voltage pulses on UL for activating SWUL in a controlled manner for controlling the discharge rate as further described herein.

Each of the phase switches 116, including SWUL, has a power rating. The power rating may be expressed as a curve (not shown) illustrating a maximum current level for each voltage across a full range of allowable voltages. When the voltage of the link capacitor 114 is large, the current through SWUL should be limited according to the power rating curve. As the voltage across the link capacitor 114 decreases during the discharge operation, the current may be increased so long as maintained within the power rating. Also, each phase switch has a thermal impedance over time depicting how power is dissipated in the device. Whereas it may be possible to turn the switch on continuously to dissipate charge, such an approach may also result in a significant build-up of heat. In addition, it is desired to discharge the link capacitor 114 within a predetermined threshold period of time, such as within 1 second (s) or the like. It has been determined that an optimal approach is to toggle the phase switch on and off using voltage pulses to dissipate charge quickly without excessive accumulation of thermal energy.

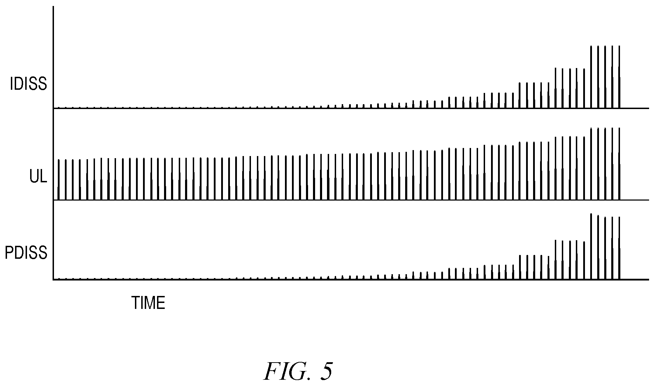

FIG. 5 is a timing diagram plotting discharge current IDISS, voltage of UL, and instantaneous power dissipation PDISS versus time using a selected discharge method according to one embodiment of the present disclosure. The timing diagram is shown without units or scale but instead simply illustrates the relative changes made for each parameter over time until a desired discharge rate is achieved. The magnitude of the UL is started at a minimum threshold level that is just sufficient to turn on SWUL. UL is pulsed with a predetermined fixed pulse width at a fixed pulse period having a pulse magnitude that is gradually increased until a selected discharge current level is achieved. As shown, as UL is incrementally increased, the discharge current IDISS and the instantaneous power dissipation PDISS both correspondingly increase. When IDISS reaches a level that achieves a desired discharge rate to discharge the link capacitor 114 within a predetermined time period, the magnitude of UL may remain substantially stable until the link capacitor 114 is discharged.

In one specific embodiment, the minimum threshold level of UL is about 3V for turning on SWUL, and UL may range up to about 15V. The pulse width of the voltage pulses of UL is sufficient to achieve a desired current level over time without generating excessive heat, such as, for example, about 3 microseconds (µs), although alternative pulse widths are contemplated for different switch types and configurations. The pulse period of UL may be selectable to achieve any one of multiple duty cycles, such as 100µs, 200µs, or 300µs, or the like. The UL voltage is gradually or incrementally increased until the magnitude of IDISS reaches a level during each pulse that sufficiently discharges the link capacitor 114 within the specified time period. In one embodiment, for example, the desired discharge period is about Is. It is appreciated that the voltage levels and timing values may each vary for different configurations.

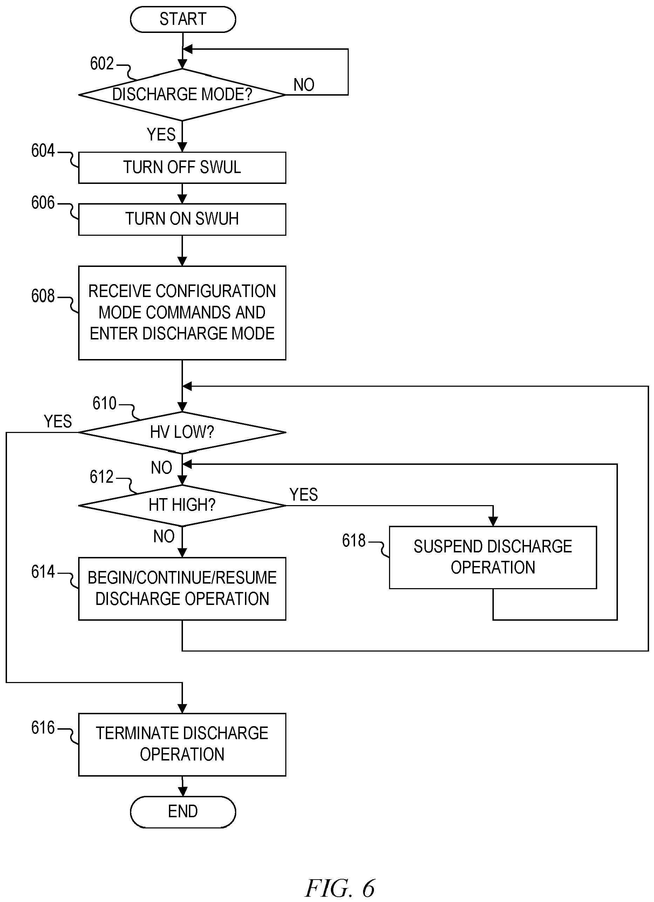

FIG. 6 is a flowchart diagram illustrating operation of the discharge control circuitry 202 for controlling discharge operations according to one embodiment of the present disclosure. At a first block 602, it is queried whether a discharge mode is active. The discharge mode may be entered, for example, when the controller 108 indicates that a key or ignition switch or the like has been turned off. Operation loops at block 602 until the discharge mode is indicated. When the discharge mode is indicated, operation advances to block 604 in which the discharge control circuitry 202 asserts UL low to fully turn off the lower switch SWUL, and then operation advances to block 606 in which the discharge control circuitry 202 asserts UH high to fully turn on the upper switch SWUH. In this manner, the full voltage of the link capacitor 114 is placed across SWUL, which is initially switched off.

Operation then advances to block 608 for receiving configuration mode commands for fully entering the discharge operating mode. Although not specifically shown, the controller 108 includes a low voltage portion and a high voltage portion, in which the low voltage portion includes a processor (such as a microcontroller or microprocessor or the like, not shown) that issues configuration commands to circuitry of the high voltage portion. In one embodiment, the processor may command entry into a configuration mode and then into the discharge mode. Certain pull-up and pull-down devices and active miller clamps (AMCs) for the phase switches may be turned off or otherwise disabled, and the discharge control circuitry 202 is enabled for performing discharge functions. It is noted that certain fail-safe methods may also be employed, such as in the event of an automobile accident when communications from the processor may be disabled or unavailable for any reason. The discharge mode may alternatively be entered through a dedicated pin on the high voltage portion to ensure that the link capacitor 114 is discharged. The discharge mode may alternatively be entered through a dedicated pin on the low voltage portion driven by safing logic (not shown) that is independent of the processor and activated any time the processor goes down.

After entering the discharge mode, operation advances to next block 610 in which it is queried whether the HV signal is low for determining whether the link capacitor 114 is discharged. Normally, after normal mode when initially entering the discharge mode, the link capacitor 114 is fully charged by the battery 102, which has just been disconnected. Initially assuming that the link capacitor 114 is charged at a high voltage and HV is high, operation advances to block 612 to query whether the HT signal is high indicating that the temperature of SWUL is above the predetermined high temperature threshold. Initially assuming that the temperature of SWUL is below the high temperature threshold such that HT is low, operation advances to block 614 to begin the discharge operation. As described further below, the discharge operation begins by applying pulses on UL to periodically activate SWUL to begin discharging the link capacitor 114. Operation then loops back to block 610 in which operation loops between blocks 610, 612 and 614 during the discharge operation while continuously monitoring HV and HT. After the first iteration of block 614, discharge operation is continued until either HV is detected low or HT is detected high.

Assuming that discharge operation is successful without generating excessive heat such that HT remains low, eventually the comparator 204 asserts HV low indicating that the link capacitor 114 is discharged. When HV is detected low, operation instead advances to block 616 in which the discharge operation is terminated. Any pulses being applied on UL are stopped and discharge circuitry may be shut down or placed in standby mode or the like.

During discharge operation, if the temperature sensor asserts HT high indicating that temperature of the SWUL has exceeded the high temperature threshold as detected at block 612, then operation advances instead to block 618 in which the discharge operation suspended. As described further herein, pulses on UL are stopped to prevent any further heat build-up. Operation loops between blocks 612 and 618 while HT remains high. If and when the temperature has subsided such that HT goes low as determined at block 612, operation advances to block 614 to resume the discharge operation, and then operation loops back to block 610 as previously described.

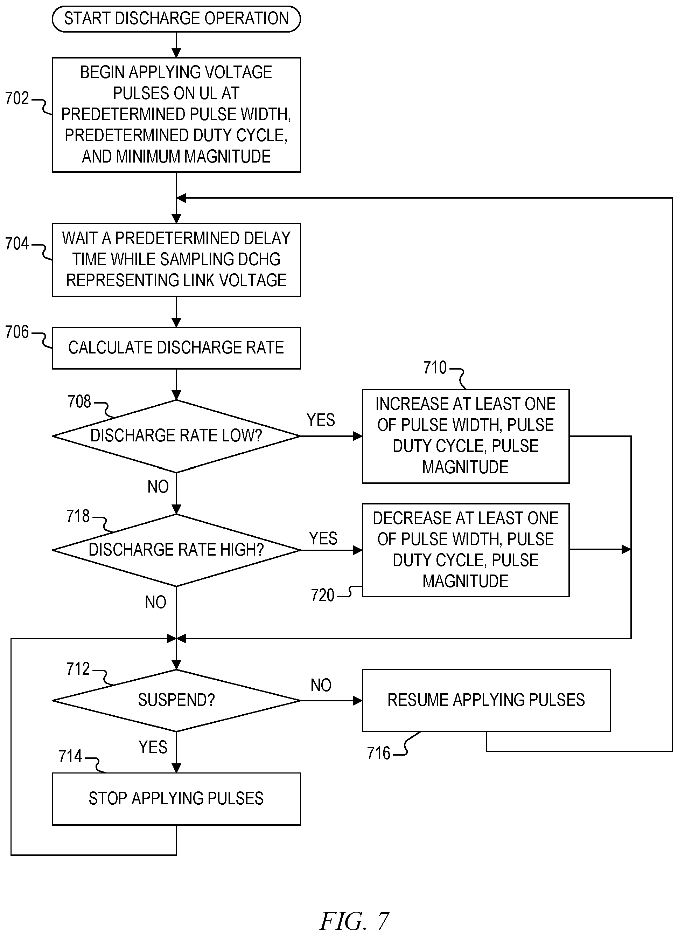

FIG. 7 is a flowchart diagram illustrating operation of the discharge control circuitry 202 for performing discharge operations according to one embodiment of the present disclosure. At a first block 702, the discharge control circuitry 202 begins applying voltage pulses on UL at a predetermined pulse width, a predetermined duty cycle, and at a minimum magnitude. Operation advances to next block 704, in which the discharge control circuitry 202 waits a predetermined delay time while sampling DCHG from the ADC 208 for monitoring change of voltage of the link capacitor 114. The delay time is sufficiently long to determine the current discharge rate. Operation advances to next block 706 in which the discharge control circuitry 202 calculates the discharge rate based on the accumulated samples.

Operation then advances to block 708 to query whether the discharge rate is too low. In one embodiment, the pulse width and duty cycle are fixed, and the pulse magnitude is initially at a minimum so that the discharge rate is intentionally lower than desired. If so, operation advances to block 710 in which at least one pulse parameter, such as at least one of pulse width, pulse duty cycle and pulse magnitude, is increased to increase the discharge rate. It is noted that increasing the pulse width may lead to thermal build-up so that in one embodiment, the pulse width may be fixed. It is also noted that any heat generated during an active pulse should be given time to dissipate, so that increasing the duty may also lead to thermal build-up, so that in one embodiment, the duty cycle is also fixed. In one embodiment, the pulse magnitude starts at a minimum level and is incrementally increased at block 710.

After block 710, operation advances to block 712 in which it is queried whether to suspend the discharge operation. Referring back to block 618, if HT was detected asserted high, then the discharge operation is temporarily suspended to allow time for excessive heat to dissipate. If so, operation advances to block 714 in which the discharge control circuitry 202 stops applying pulses on UL. Operation loops between blocks 712 and 714 while discharge operation is suspended. If instead discharge operation is not suspended, or after being temporarily suspended, then operation advances to block 716 in which the discharge control circuitry 202 resumes applying pulses, and operation loops back to block 704 to again sample DSHG for determining the discharge rate.

Referring back to block 708, if the current discharge rate is not too low, then operation advances instead to block 718 to query whether the discharge rate is too high. It is noted that there may be an acceptable discharge rate range for discharging the link capacitor 114 within a predetermined time period. If for any reason the discharge rate is too high such that it may generate excessive heat, then operation advances to block 720 in which at least one of pulse width, pulse duty cycle and pulse magnitude is decreased. It is noted that in one embodiment pulse width and duty cycle may both be fixed, so that the pulse magnitude is incrementally decreased to reduce the discharge rate. If the discharge rate is not too high as determined at block 718, or after the discharge rate has been decreased at block 720, operation advances to block 712 to query whether discharge operation is to be suspended as previously described.

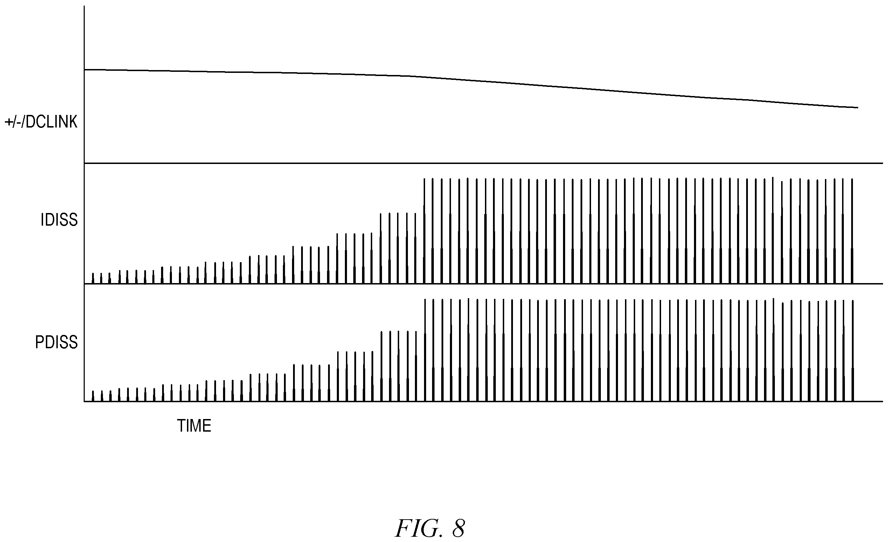

FIG. 8 is a timing diagram plotting +/- DCLINK voltage across the link capacitor 114, discharge current IDISS, and instantaneous power dissipation PDISS versus time using a selected discharge method according to one embodiment of the present disclosure. Again, the timing diagram is shown without units or scale but instead simply illustrates the relative changes made for each parameter over time until a desired discharge rate is achieved. As shown in FIG. 8, as the pulse magnitude is incrementally increased, the discharge current IDISS is also incrementally increased until reaching a desired discharge rate. The +/- DCLINK voltage begins to decrease and then decreases at a steady rate when the target discharge rate is achieved. PDISS also increases until remaining stable at the desired or target discharge rate. An optimal IDISS and PDISS may be determined for discharging the link capacitor 114 within the target period of time without accumulating excessive heat.

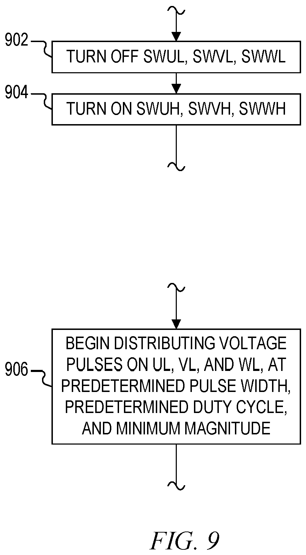

FIG. 9 shows alternative flowchart blocks 902, 904, and 906 that may replace blocks 604 and 606 of FIG. 6 and block 702 of FIG. 7, respectively, according to an alternative embodiment of the present disclosure. At block 902, rather than simply turning off phase switch SWUL of phase U, each of the lower phase switches SWUL, SWVL, and SWWL of the phases U, V, and W, respectively, are turned off. At next block 904, each of the upper phase switches SWUH, SWVH, and SWWH of the phases U, V, and W, respectively, are turned on. At block 906, rather than applying pulses only on UL, pulses are applied in a distributed manner on UL, VL and WL to pulse the switches SWUL, SWVL, and SWWL in a round-robin fashion.

Embodiments of the present disclosure may include features recited in the following numbered clauses:
1. A method of discharging a link capacitor coupled between link nodes of a multiple phase inverter in which each phase comprises a pair of switches coupled in series between the link nodes, comprising:
   turning off a first switch of a first phase;
   turning on a second switch of the first phase;
   while the second switch of the first phase remains turned on, activating the first switch of the first phase with pulses; and
   monitoring a link voltage across the link nodes until the link capacitor is discharged.
2. The method of clause 1, wherein the activating the first switch of the first phase with pulses comprises activating the first switch of the first phase with voltage pulses having a fixed width and having a fixed duty cycle while varying a magnitude of pulse voltage until a target discharge rate is achieved.
3. The method of clause 2, further comprising:
   the activating the first switch of the first phase with voltage pulses comprises beginning to activate the first switch of the first phase with pulses having a minimum threshold magnitude voltage;
   determining a rate of change of the link voltage; and
   increasing the magnitude of the pulse voltage while the rate of change is below a discharge threshold.
4. The method of clause 3, further comprising:
   holding the magnitude of the pulse voltage steady while the rate of change is at the discharge threshold; and
   decreasing the magnitude of the pulse voltage when the rate of change is above the discharge threshold.
5. The method of clause 1, wherein the activating the first switch of the first phase with pulses comprises activating the first switch of the first phase with voltage pulses having a predetermined initial pulse width, having a predetermined initial duty cycle, and having a predetermined magnitude.
6. The method of clause 5, further comprising adjusting the magnitude of the voltage pulses until a target discharge rate is achieved.
7. The method of clause 5, further comprising adjusting the duty cycle of the voltage pulses until a target discharge rate is achieved.
8. The method of clause 5, further comprising adjusting the pulse width of the voltage pulses until a target discharge rate is achieved.
9. The method of clause 5, further comprising adjusting at least one of the magnitude, the duty cycle, and the pulse width until a target discharge rate is achieved.
10. The method of clause 1, wherein the activating the first switch of the first phase with pulses comprises applying voltage pulses to a control terminal of the first switch of the first phase.
11. The method of clause 1, further comprising:
   monitoring a temperature of the first switch; and
   discontinuing the activating the first switch of the first phase with pulses while the temperature exceeds a predetermined high temperature threshold.
12. The method of clause 11, further comprising re-continuing activating the first switch of the first phase with pulses when the temperature falls to a predetermined low temperature threshold.
13. The method of clause 1, further comprising turning off at least one of the pair of switches of every phase other than the first phase.
14. The method of clause 1, wherein the turning off a first switch of a first phase comprises turning off a low-side switch of the first phase, wherein the turning on a second switch of the first phase comprises turning on a high-side switch of the first phase, and wherein the activating the first switch of the first phase with pulses comprises activating the low-side switch of the first phase with pulses.
15. A method of discharging a link capacitor coupled between link nodes of a multiple phase inverter in which each phase comprises a pair of switches coupled in series between the link nodes, comprising:
   turning off a first switch of each of a plurality of phases;
   turning on a second switch of each of the plurality of phases;
   while the second switch of each of the plurality of phases remains turned on, activating a first switch of at least one of the plurality of phases with pulses; and
   monitoring a link voltage across the link nodes until the link capacitor is discharged.
16. The method of clause 15, wherein the activating a first switch of at least one of the plurality of phases with pulses comprises activating a first switch of each of the plurality of phases with pulses.
17. The method of clause 15, alternating pulses among the plurality of phases in round-robin fashion so that only one first switch of the plurality of phases is activated at a time.
18. The method of clause 15, wherein the activating a first switch of at least one of the plurality of phases with pulses comprises:
   activating a first switch of a first phase with first pulses; and
   activating a first switch of a second phase with second pulses.
19. The method of clause 18, further comprising alternating between the first and second pulses so that only one first switch of the plurality of phases is activated at a time.
20. The method of clause 15, wherein the activating the first switch of at least one of the plurality of phases with pulses comprises activating the first switch of at least one of the plurality of phases with voltage pulses having a fixed width and having a fixed duty cycle while varying a magnitude of pulse voltage until a target discharge rate is achieved.

Generally speaking, rather than applying pulses on one switch of one phase, the pulses may instead be distributed in round-robin fashion among multiple switches of multiple phases up to all of the phases for a given configuration. Rather than monitoring the temperature of a single switch, the temperature of each pulsed switch is monitored to prevent excessive heat build-up, which is less likely when multiple switches are pulsed. The rate of discharge may be the same or may even be increased for discharging the link capacitor 114 even more quickly without excessive heat. Multiple phase charge dissipation applies to configurations with any number of phases greater than a single phase.

Although the present invention has been described in connection with several embodiments, the invention is not intended to be limited to the specific forms set forth herein. On the contrary, it is intended to cover such alternatives, modifications, and equivalents as can be reasonably included within the scope of the invention as defined by the appended claims. For example, variations of positive circuitry or negative circuitry may be used in various embodiments in which the present invention is not limited to specific circuitry polarities, device types or voltage or error levels or the like. For example, circuitry states, such as circuitry low and circuitry high may be reversed depending upon whether the pin or signal is implemented in positive or negative circuitry or the like. In some cases, the circuitry state may be programmable in which the circuitry state may be reversed for a given circuitry function.

The terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements.

## Claims

1. A method of discharging a link capacitor coupled between link nodes of a multiple phase inverter in which each phase comprises a pair of switches coupled in series between the link nodes, comprising:
turning off a first switch of a first phase;
turning on a second switch of the first phase;
while the second switch of the first phase remains turned on, activating the first switch of the first phase with pulses; and
monitoring a link voltage across the link nodes until the link capacitor is discharged.

2. The method of claim 1, wherein the activating the first switch of the first phase with pulses comprises activating the first switch of the first phase with voltage pulses having a fixed width and having a fixed duty cycle while varying a magnitude of pulse voltage until a target discharge rate is achieved.

3. The method of claim 2, further comprising:
the activating the first switch of the first phase with voltage pulses comprises beginning to activate the first switch of the first phase with pulses having a minimum threshold magnitude voltage;
determining a rate of change of the link voltage; and
increasing the magnitude of the pulse voltage while the rate of change is below a discharge threshold.

4. The method of claim 3, further comprising:
holding the magnitude of the pulse voltage steady while the rate of change is at the discharge threshold; and
decreasing the magnitude of the pulse voltage when the rate of change is above the discharge threshold.

5. The method of claim 1, wherein the activating the first switch of the first phase with pulses comprises activating the first switch of the first phase with voltage pulses having a predetermined initial pulse width, having a predetermined initial duty cycle, and having a predetermined magnitude.

6. The method of claim 5, further comprising adjusting the magnitude of the voltage pulses until a target discharge rate is achieved.

7. The method of any one of claims 5 to 6, further comprising adjusting the duty cycle of the voltage pulses until a target discharge rate is achieved.

8. The method of any one of claims 5 to 7, further comprising adjusting the pulse width of the voltage pulses until a target discharge rate is achieved.

9. The method of claim 5, further comprising adjusting at least one of the magnitude, the duty cycle, and the pulse width until a target discharge rate is achieved.

10. The method of any one of claims 1 to 9, wherein the activating the first switch of the first phase with pulses comprises applying voltage pulses to a control terminal of the first switch of the first phase.

11. The method of any one of claims 1 to 10, further comprising:
monitoring a temperature of the first switch; and
discontinuing the activating the first switch of the first phase with pulses while the temperature exceeds a predetermined high temperature threshold.

12. The method of claim 11, further comprising re-continuing activating the first switch of the first phase with pulses when the temperature falls to a predetermined low temperature threshold.

13. The method of any one of claims 1 to 12, further comprising turning off at least one of the pair of switches of every phase other than the first phase.

14. The method of any one of claims 1 to 13, wherein the turning off a first switch of a first phase comprises turning off a low-side switch of the first phase, wherein the turning on a second switch of the first phase comprises turning on a high-side switch of the first phase, and wherein the activating the first switch of the first phase with pulses comprises activating the low-side switch of the first phase with pulses.
